# EUROPEAN PATENT SPECIFICATION

(11) **EP 4 424 561 B1**
(45) Date of publication and mention of the grant of the patent: **19.08.2026**
(21) Application number: 23159206.4
(22) Date of filing: 28.02.2023
(51) Int. Cl.: B60S 1/38

(54) **ATTACHMENT DEVICE FOR A WIPER BLADE**
BEFESTIGUNGSVORRICHTUNG FÜR EIN WISCHERBLATT
DISPOSITIF DE FIXATION POUR BALAI D'ESSUIE-GLACE

(43) Date of publication of application: 04.09.2024
(73) Proprietor: Valeo Systèmes d'Essuyage, 78322 Le Mesnil Saint Denis (FR)
(72) Inventor: JABLECKI, Sebastian, 32 050 Skawina (PL); OSTROGORSKI, Tomasz, 32 050 Skawina (PL)
(74) Representative: Valeo Visibility

(56) References cited:
- WO-A1-2020/136079
- US-A- 2 700 785
- US-A- 4 317 251
- US-A1- 2013 257 107

## Description

### Technical field

The field of the present invention is that of wipers used on motor vehicles. The invention relates particularly to an attachment clip mounted on a wiper. The invention also relates to an assemble comprising a wiper and at least one said attachment clip.

In a known manner, wiper systems for motor vehicles include at least one drive arm and a wiper blade which includes a squeegee blade intended to be brought to bear against a glass surface of the motor vehicle. The drive arm is driven in a back-and-forth angular movement against the glass surface of the motor vehicle, during which it drives the wiper blade and its squeegee blade so that it rubs the glass surface and thus removes water, dirt and dust that may impede the motor vehicle driver's view of his surroundings.

In a known manner, the wiper blade is attached to the drive arm by a connection assembly that comprises a connector integral with the wiper blade and an adapter configured to cooperate with the wiper blade and with an end portion of the drive arm. This connection assembly is configured, on the one hand, to allow the reciprocating movements of the wiper blade against the glass surface in question, and, on the other hand, to guarantee an effective flattening of the wiper blade against the glass surface in order to achieve an effective wiping and/or cleaning.

The wiper blade comprises generally a longitudinal support and a squeegee blade intended to be pressed against the window, the squeegee blade being maintained on the longitudinal support by an attachment device.

The attachment device is configured so as to be locked on the longitudinal support, and consequently so as to avoid lateral movement between the longitudinal support and the squeegee blade.

The documents US 4,317,251 A and US 2013/0257107 A1 illustrate wiper systems for motor vehicles, as known in the state of the art.

A disadvantage of known automotive systems is that when the glass surface is highly curved, for example on the sides of a windshield, the attachment device may scratch the glass in certain arm positions.

The invention proposes an attachment device for a wiper blade that is able to avoid scratches on the glass surface during wiping.

### Summary of the invention

For this purpose, the invention proposes an attachment device for a vehicle window wiper, the attachment device comprising a lower face extending in a lower plane, the attachment device comprising a first part made of a first material, and a second part made of a second material, the second material being more flexible than the first material, the second part being at least in contact with said lower plane.

Such an attachment device prevents the window from being scratched during wiping. Indeed, the second part of the attachment device is made of a more flexible material than the first part of the attachment device that prevents the attachment device, and more particularly the first part from scratching the window.

According to one aspect of the invention, the second part is configured to come between the window and the first part.

According to one aspect of the invention, the second part is made of an elastic plastic material, for example ethylene propylene diene monomer (EPDM) Rubber.

According to one aspect of the invention, the first part is made of a rigid plastic material, for example acrylonitrile butadiene styrene (ABS).

According to one aspect of the invention, the vehicle window wiper comprises at least one longitudinal support and a squeegee blade intended to be pressed against the window, the second part of the attachment device being made of the same material as a squeegee blade.

According to one aspect of the invention, the second part is made of a material which is different from the squeegee blade material.

In one aspect of the invention, the lower face of the attachment device comprises a slot configured to retain the squeegee blade.

In one aspect of the invention, on each side of the slot, the attachment device comprises a notch arranged to tackle the squeegee blade against the longitudinal support.

According to one aspect of the invention the first part is made of a single piece.

According to one aspect of the invention, the second part is made of a single piece.

According to one aspect of the invention, the second part extends at least partially along the lower plane of which the lower face of the attachment device extends.

According to one aspect of the invention, the second part extends totally along the lower plane of which the lower face of the attachment device extends.

According to one aspect of the invention, the second part comprises at least a protrusion that protrudes beyond said lower plane in a direction intersecting with said lower plane.

According to one aspect of the invention, the second part comprises at least a protrusion that protrudes beyond said lower plane in a direction opposite to said lower plane.

According to one aspect of the invention, the protrusion comprises a lip configured to protrude in a direction intersecting with said lower plane.

According to one aspect of the invention, the protrusion comprises a lip configured to protrude in a direction opposite to the lower plane.

According to one aspect of the invention, the lip is linked to the connecting area by a neck.

In other words, in one aspect of the invention, the protrusion has a "pine tree" shape. By "pine tree" shape, it is understood here that the protrusion comprises a lip presenting a triangular shape similar to a squeegee blade, said lip being connected to the connection area by the neck having a thickness lower than the connection area thickness and / or the lip thickness.

According to one aspect of the invention, the neck between the connecting area and the lip is flexible.

According to one aspect of the invention, the dimensions of the neck are chosen to make it robust and flexible. Thus, the neck prevents the attachment device to be broken and ensure the second part, more specifically the lip of the second part, to follow the shape of the window against which it is pressed.

In another embodiment, the protrusion has a polygonal or round shape, or a combination of flat and curved surfaces. According to one aspect of the invention, the second part is configured to fit at least partially into the first part.

According to one aspect of the invention, the second part is at least partially housed in the first part.

According to the invention, the first part comprises a receiving area configured to receive a connecting area of the second part, said receiving area and said connecting area being complementary to each other.

According to one aspect of the invention, the receiving area comprises a hollow arranged to receive the connecting area of the second part.

According to one aspect of the invention, the receiving area of the first part has a shape arranged to maintain the connecting area of the second part in said receiving area.

According to one aspect of the invention, the receiving area of the first part comprises at least one holding element, said holding element being arranged to retain the connecting area of the second part in said receiving area.

According to one aspect of the invention, at least one holding element comprises a flange, the connecting area of the second part having a shape fitting said flange, the connecting area of the second part being arranged to be retained by said flange.

According to one aspect of the invention, at least one holding element comprises a pin, the connecting area of the second part having a shape fitting said pin, the connecting area of the second part being arranged to be retained by said pin.

According to one aspect of the invention, the first part is at least partially adjacent to the second part.

According to one aspect of the invention, the first part comprises a protuberance, said protuberance comprising the receiving area.

According to one aspect of the invention, the attachment device comprises an upper face opposite to the lower face, said upper face extending along an upper plane, the protuberance protruding beyond said upper plane in a direction intersecting with said upper plane.

According to one aspect of the invention, the second part comprises at least a border arranged to fit the protuberance of the first part.

According to one aspect of the invention, the border is pressed against the protuberance, more particularly against a lower face of the protuberance. In an aspect of the invention, the lower face is inclined compared to the lower or the upper plane. In other words, the lower face of the protuberance has a different direction compared to the upper or lower plane.

According to one aspect of the invention, the neck is comprised between, the border and the protrusion.

According to one aspect of the invention, the first part is configured to be overmolded on the second part.

According to one aspect of the invention, the second part is arranged to be mechanically maintained in the first part by the at least one holding element.

According to one aspect of the invention, the connecting area of the second part is arranged to be maintained in the receiving rea of the first part by shape complementarity.

According to one aspect of the invention, the connecting area of the second part is arranged to be maintained in the receiving rea of the first part by at least one of the holding elements.

According to one aspect of the invention, the second part is arranged to be fixed to the first part by at least one fastening means such as glue, clips or welding.

According to one aspect of the invention, the second part comprises a hollow.

According to another aspect of the invention, the second part is filled with the second material.

According to one aspect of the invention, the attachment device comprises a rear longitudinal face configured to be pressed against a window and a front longitudinal face opposite to said rear longitudinal face, said rear and front longitudinal faces extending parallelly to a longitudinal axis.

According to one aspect of the invention, the rear longitudinal face is at least partially adjacent to the connecting area of the second part.

According to one aspect of the invention, the second part extends all along the rear longitudinal face.

According to one aspect of the invention, the rear longitudinal face is part of the second part.

According to one aspect of the invention, the rear longitudinal face is made of the first material.

According to one aspect of the invention, the first part made of the first material comprises an insertion slot, said insertion slot being at the intersection of the rear longitudinal face and the lower face of the protuberance, said slot being configured to be crossed by the protrusion.

According to one aspect of the invention, the second part extends all along the front longitudinal face.

According to one aspect of the invention, the front longitudinal face is part of the second part.

According to one aspect of the invention, the front longitudinal face is made of the first material.

According to one aspect of the invention, the protrusion is intended to be pressed against a window only at certain wiping positions.

According to one aspect of the invention, the first part is obtained by extrusion.

According to one aspect of the invention, the second part is obtained by extrusion.

According to one aspect of the invention, the attachment device comprises at least one retaining element arranged to retain the longitudinal support of the wiper blade.

According to one aspect of the invention, the first part comprises said retaining element.

According to one aspect of the invention, the retaining elements are for example pins or tips arranged to retain the longitudinal support. This prevents the longitudinal support of the wiper blade from slipping.

The purpose of the invention is also to propose an assembly comprising:
- A wiper comprising one longitudinal support and a squeegee blade intended to be pressed against the window,
- At least an attachment device according to any one of the features set out above, said attachment device being configured to be positioned on an intermediate section of the wiper, and to maintain the squeegee blade and the longitudinal support.

According to one aspect of the invention, the assembly comprises at least one end fitting arranged to be mounted at least one extremity of the wiper.

According to one aspect of the invention, the attachment device is arranged to fit the shape of the end fitting.

According to one aspect of the invention, the attachment device is arranged to be adjacent to the end fitting.

Further features, details and advantages of the invention will become more clearly apparent from reading the description given below by way of indication with reference to the drawings, in which:
[FIG. 1] is a perspective view of an attachment device according to the prior art,
[Fig. 2] is an overall perspective view of a wiper according to the invention,
[Fig. 3] is a perspective view of an attachment device according to one embodiment of the invention,
[Fig. 4] is a perspective front view of the attachment device mounted on a wiper blade according to FIG. 3,
[Fig. 5] is a perspective front view of the attachment device mounted on a wiper blade according to FIG. 3.

It should first of all be noted that the figures disclose the invention in a detailed manner so as to implement the invention, and said figures may of course serve to define the invention more clearly, where necessary.

In the rest of the description, the denominations longitudinal or lateral, top, bottom, front, rear refer to the orientation of the wiper or of the attachment device according to the invention. The longitudinal direction corresponds to the axis of extension of the blade. The lateral direction corresponds to a direction perpendicular to the longitudinal direction and parallel to a windscreen surface upon which the windscreen wiper blade is placed. Likewise, the vertical direction corresponds to a direction perpendicular to the longitudinal direction and normal to said windscreen surface. The denominations "upper" and "lower" are relative to said vertical direction. The denominations "rear" and "front" are relative to the general orientation of the vehicle on which the blade is mounted, in the same way.

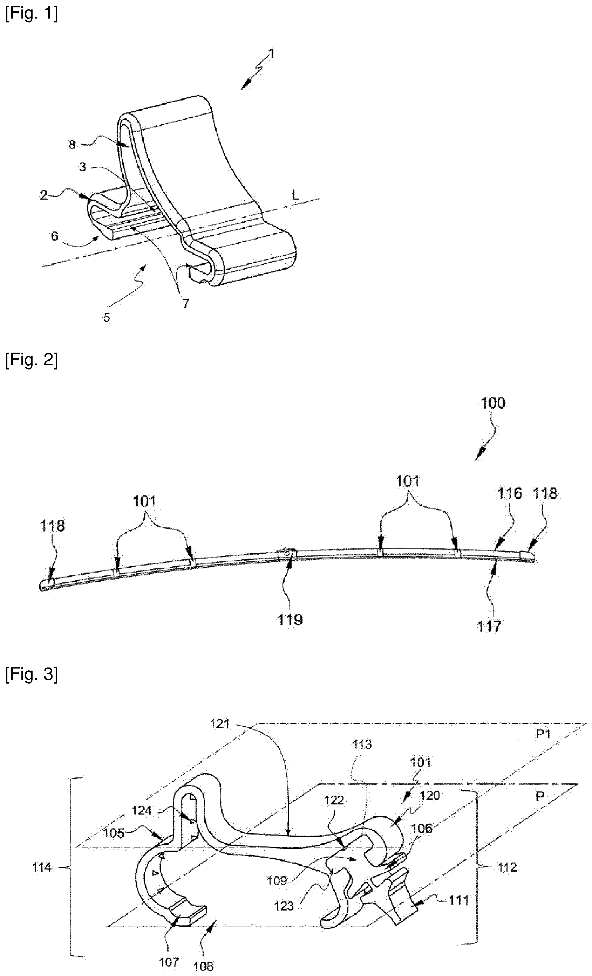

FIG. 1 shows a perspective view of an attachment device 1 according to the prior art. Such an attachment device 1 has a function of mechanically holding the components of a wiper, for example for preventing lateral movements of said components.

The attachment device 1 has an outside wall 2 complementary to the wiper. Inside an internal volume 3 delimited by the outside wall 2, the attachment device 1 comprises a slot 5, the function of which is to mechanically retain a heel of the squeegee blade of the wiper. Such a slot 5 is formed in the lower face 6 of the attachment device 1. This slot 5 is open towards the outside, this opening being delimited by two hooks notches 7 which extend longitudinally along the attachment device 1.

The attachment device 1 also comprises a housing arranged to form a volume 8 complementary to the longitudinal support.

The attachment device 1 of Figure 1 is made of one or more rigid materials.

Referring first of all to FIG. 2, an assembly 100 according to the invention can be seen. Such a wiper 100 is used to wipe a window of a vehicle and to move the water present on this window out of a driver's field of view. The assemble 100 is made up of at least one longitudinal support 116, a squeegee blade 117 at least one, or even two, end fittings 118 that are installed on each end part of the longitudinal support 116, and at least one, here four attachment devices 101 are installed on an intermediate section of the wiper. The longitudinal support 116 is advantageously flexible.

The longitudinal support 116 may take the form of a single flat and elastic metal strip. According to one alternative, the longitudinal support 116 may be formed by two elastic metal strips that are each inserted into a slot formed on either side of the squeegee blade 117. The longitudinal support is arranged to retain the squeegee blade. In the two cases above, in the rest state, such a metal strip is curved in a plane perpendicular to a longitudinal direction of the strip. The function of such a metal strip, whether there is one or two thereof, is to distribute along the squeegee blade 117 the bearing forces that are applied by a wiper arm at a connection means 119 attached to the longitudinal support 116 at the center, longitudinally, of the wiper 100.

More particularly, the connection means 119 is intended to connect the wiper to said wiper arm for driving this wiper in rotation. It may also be one or more air deflectors which are attached to the longitudinal support 116 and the function of which is to convert the air flow passing over the wiper into a bearing force which presses the blade 117 against the window.

The wiper 100 also comprises two attachment devices 100, here four attachment devices of identical form, as described below with reference to Figures 3 to 5.

Figures 3, 4 and 5 show perspective views of the attachment device 101 according to a first embodiment of the invention.

The attachment device 101 differs from the attachment device 1 of Fig. 1 in that it comprises a first part 105 made of a rigid plastic material, for example acrylonitrile butadiene styrene (ABS); and a second part 106 made of a more flexible material, for example ethylene propylene diene monomer (EPDM) rubber. The attachment device 101 comprises a lower face 107, said lower face 107 extending in a lower plane P and said lower face 107 being provided with a slot 108 open towards the outside. The slot 108 is configured to mechanically retain a heel of the squeegee blade of a wiper.

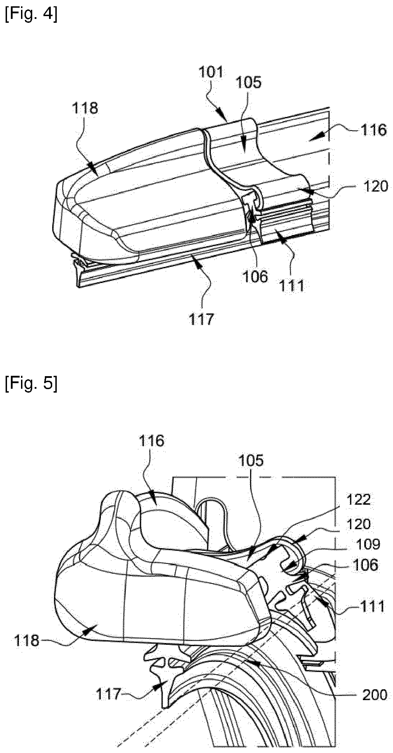

The second part 106 is made of a material with elastic properties, eliminating the risk of scratching the glass while ensuring effective wiping. In this embodiment, the second part 106 comprises a protrusion 111, which is here a lip, which protrudes beyond the lower plane P in a direction that intersects with the lower plane P. The second part 106 is configured to at least partially make contact with a window 200 (figure 5) to be wiped at certain wiping positions. The second part 106 being in contact with the lower plane P on which the lower face 107 of the attachment device 101 extends, the attachment device 101 does not scratch the window during wiping. The second part 106 allows to protect the window 200 from the first part 105 of the attachment device which is made of a more rigid material than the second part 106.

In this embodiment, the first part 105 comprises a receiving area 113 configured to receive a connecting area 109 of the second part 106. The receiving area 113 of the first part 105 and the connecting area 109 of the second part 106 are complementary to each other. The receiving area 113 of the first part 105 is located in a protuberance 120 of the attachment device. This protuberance120 extends beyond an upper plan P1 which is parallel to the lower plane P and on which an upper face 121 extends. Such a protuberance 120 allows to make easier the mounting of the attachment device 101. The attachment device 101 comprises a front longitudinal face 114 which is parallel to a longitudinal axis L and a rear longitudinal face 112, said rear longitudinal face 112 being adjacent to the connecting area 109 of the second part 106. In this example, the protrusion 111 of the second part 106 extends beyond the lower plane P on which the lower face 107 is extending all along the rear longitudinal face 112.

In this embodiment, the receiving area 109 of the first part 105 and the connecting area 113 of the second part 106 have complementary shapes. On this embodiment, the shapes of the connecting area 113 and the receiving area 109 comprise at least an angle 115.

Here, the second part 106 can be overmolded on the first part 105. In another embodiment, the second part 106 is mechanically retained by the first part 105. More precisely, the receiving area 113 comprises holder elements such as pins 123 and flanges 122 arranged to maintain the connecting area 109 of the second part 106 in the receiving area 113. Hence, the second part is firmly retained in the receiving area 113 of the first part 105.

In another embodiment, the first 105 and the second 106 parts could be fixed with at least a clip or glue.

The second part 106 comprises the connecting area 109, a neck 124, two borders 125 arranged to be pressed against the lower face of the protuberance, and the protrusion 111 arranged to be pressed against a window. The neck is arranged between the connecting area 109 and the protrusion 111, more precisely between the borders 125 and the protrusion 111. The protrusion 111 has here an "arrow" or "pine tree" shape.

In this embodiment, the second part 106 is configured to make contact with a glass surface, such as a window or a windscreen, at certain wiping positions of a window wiper, and to come between the first part 105 which is made of a rigid material and said window. In consequence, scratches that might otherwise be made by the first part 105 rubbing against the window are avoided.

## Claims

1. An attachment device (101) for a vehicle window wiper, the attachment device (101) comprising a lower face (107) extending in a lower plane (P), the attachment device (101) comprising a first part (105) made of a first material, and a second part (106) made of a second material, the second material being more flexible than the first material, the second part (106) being at least in contact with said lower plane (P), wherein the first part (105) comprises a receiving area (113) configured to receive a connecting area (109) of the second part (106), said receiving area (113) and said connecting part (109), being complementary to each other, **characterised in that** the second part (106) is configured to at least partially make contact with a vehicle window (200) only at certain wiping positions of the vehicle window wiper.

2. An attachment device (101) according to claim 1, wherein the second part (105) is made of an elastic plastic material such as ethylene propylene diene monomer.

3. An attachment device according to claims 1 or 2, wherein the first part (105) extends at least partially along the lower plane (P).

4. An attachment device (101) according to claims 1 to 3, wherein the second part comprises at least a protrusion (111) that protrudes beyond said lower plane (P), in a direction intersecting with said lower plan (P).

5. An attachment device according to any one of the preceding claims, wherein the first part (105,) is at least partially adjacent to the second part (106).

6. An attachment device according to any one of the preceding claims, wherein the receiving area (113) of the first part (105) comprises at least one holding element (122, 123), said holding element being arranged to retain the connecting area (109) of the second part (106) in said receiving area (113).

7. An attachment device (101) according to any one of the preceding claims, wherein the first part comprises a protuberance (120), said protuberance comprising the receiving area, the attachment device comprises an upper face opposite to the lower face, said upper face extending along an upper plane, the protuberance protruding beyond said upper plane in a direction intersecting with said upper plane.

8. An attachment device according to any one of the preceding claims, wherein the protrusion comprises a lip configured to protrude in a direction opposite to the lower plane, said lip being linked to the connecting area by a neck.]

9. An assembly comprising:
• A wiper (2) comprising a longitudinal support (3) and a squeegee blade (4) intended to be pressed against the window,
• At least an attachment device (101) according to any one of the preceding claims configured to be positioned on an intermediate section of the wiper, and to maintain the squeegee blade and the longitudinal support in an assembled configuration.

## Patentansprüche

1. Eine Befestigungsvorrichtung (101) für einen Fahrzeugscheibenwischer, wobei die Befestigungsvorrichtung (101) eine Unterseite (107) aufweist, die sich in einer unteren Ebene (P) erstreckt, wobei die Befestigungsvorrichtung (101) ein erstes Teil (105) aus einem ersten Material und ein zweites Teil (106) aus einem zweiten Material umfasst, wobei das zweite Material flexibler ist als das erste Material, wobei das zweite Teil (106) zumindest mit der unteren Ebene (P) in Kontakt steht, wobei das erste Teil (105) einen Aufnahmebereich (113) umfasst, der so ausgebildet ist, dass er einen Verbindungsbereich (109) des zweiten Teils (106) aufnimmt, wobei der Aufnahmebereich (113) und der Verbindungsbereich (109) komplementär zueinander sind, **dadurch gekennzeichnet, dass** das zweite Teil (106) so ausgebildet ist, dass es nur an bestimmten Wischpositionen des Fahrzeugscheibenwischers zumindest teilweise mit einer Fahrzeugscheibe (200) in Kontakt kommt.

2. Befestigungsvorrichtung (101) nach Anspruch 1, wobei das zweite Teil (105) aus einem elastischen Kunststoffmaterial wie beispielsweise Ethylen-Propylen-Dien-Monomer besteht.

3. Befestigungsvorrichtung nach Anspruch 1 oder 2, wobei sich das erste Teil (105) zumindest teilweise entlang der unteren Ebene (P) erstreckt.

4. Befestigungsvorrichtung (101) nach den Ansprüchen 1 bis 3, wobei das zweite Teil mindestens einen Vorsprung (111) umfasst, der über die untere Ebene (P) hinausragt, und zwar in einer Richtung, die die untere Ebene (P) schneidet.

5. Befestigungsvorrichtung nach einem der vorstehenden Ansprüche, wobei das erste Teil (105) zumindest teilweise an das zweite Teil (106) angrenzt.

6. Befestigungsvorrichtung nach einem der vorstehenden Ansprüche, wobei der Aufnahmebereich (113) des ersten Teils (105) mindestens ein Halteelement (122, 123) umfasst, wobei das Halteelement so angeordnet ist, dass es den Verbindungsbereich (109) des zweiten Teils (106) in dem Aufnahmebereich (113) festhält.

7. Eine Befestigungsvorrichtung (101) gemäß einem der vorstehenden Ansprüche, wobei das erste Teil einen Vorsprung (120) umfasst, wobei der erste Teil eine Ausstülpung (120) umfasst, wobei die besagte Ausstülpung den Aufnahmebereich umfasst, wobei die Befestigungsvorrichtung eine der Unterseite gegenüberliegende Oberseite umfasst, wobei sich die besagte Oberseite entlang einer oberen Ebene erstreckt, wobei sich die Ausstülpung über die besagte obere Ebene hinaus in einer die besagte obere Ebene schneidenden Richtung erstreckt.

8. Befestigungsvorrichtung nach einem der vorstehenden Ansprüche, wobei der Vorsprung eine Lippe umfasst, die so ausgebildet ist, dass sie in einer Richtung entgegengesetzt zur unteren Ebene vorsteht, wobei die Lippe über einen Hals mit dem Verbindungsbereich verbunden ist.

9. Eine Baugruppe, umfassend:
• einen Scheibenwischer (2), der einen Längsträger (3) und eine Wischleiste (4) umfasst, die dazu bestimmt ist, gegen die Scheibe gedrückt zu werden,
• mindestens eine Befestigungsvorrichtung (101) gemäß einem der vorstehenden Ansprüche, die so ausgebildet ist, dass sie an einem Zwischenabschnitt des Wischers positioniert wird und die Wischleiste sowie den Längsträger in einer zusammengebauten Konfiguration hält

## Revendications

1. Dispositif de fixation (101) pour un essuie-glace de véhicule, le dispositif de fixation (101) comprenant une face inférieure (107) s'étendant dans un plan inférieur (P), le dispositif de fixation (101) comprenant une première partie (105) réalisée dans un premier matériau, et une deuxième partie (106) réalisée dans un deuxième matériau, le deuxième matériau étant plus souple que le premier matériau, la deuxième partie (106) étant au moins en contact avec ledit plan inférieur (P), dans lequel la première partie (105) comprend une zone de réception (113) configurée pour recevoir une zone de connexion (109) de la deuxième partie (106), ladite zone de réception (113) et ladite zone de connexion (109) étant complémentaires l'une de l'autre, **caractérisé en ce que** la deuxième partie (106) est configurée pour entrer au moins partiellement en contact avec une vitre de véhicule (200) uniquement dans certaines positions d'essuyage de l'essuie-glace du véhicule.

2. Dispositif de fixation (101) selon la revendication 1, dans lequel la deuxième partie (105) est réalisée en une matière plastique élastique telle que le monomère d'éthylène-propylène-diène.

3. Dispositif de fixation selon les revendications 1 ou 2, dans lequel la première partie (105) s'étend au moins partiellement le long du plan inférieur (P).

4. Dispositif de fixation (101) selon les revendications 1 à 3, dans lequel la deuxième partie comprend au moins une saillie (111) qui dépasse dudit plan inférieur (P), dans une direction coupant ledit plan inférieur (P).

5. Dispositif de fixation selon l'une quelconque des revendications précédentes, dans lequel la première partie (105) est au moins partiellement adjacente à la deuxième partie (106).

6. Dispositif de fixation selon l'une quelconque des revendications précédentes, dans lequel la zone de réception (113) de la première partie (105) comprend au moins un élément de retenue (122, 123), ledit élément de retenue étant agencé pour retenir la zone de connexion (109) de la deuxième partie (106) dans ladite zone de réception (113).

7. Dispositif de fixation (101) selon l'une quelconque des revendications précédentes, dans lequel la première partie comprend une protubérance (120), ladite protubérance comprenant la zone de réception, le dispositif de fixation comprend une face supérieure opposée à la face inférieure, ladite face supérieure s'étendant le long d'un plan supérieur, la protubérance s'étendant au-delà dudit plan supérieur dans une direction coupant ledit plan supérieur.

8. Dispositif de fixation selon l'une quelconque des revendications précédentes, dans lequel la saillie comprend une lèvre configurée pour faire saillie dans une direction opposée au plan inférieur, ladite lèvre étant reliée à la zone de connexion par un col.

9. Ensemble comprenant :
• un essuie-glace (2) comprenant un support longitudinal (3) et une lame de raclage (4) destinée à être pressée contre la vitre,
• au moins un dispositif de fixation (101) selon l'une quelconque des revendications précédentes, agencé pour être positionné sur une section intermédiaire de l'essuie-glace, et pour maintenir la lame de raclage et le support longitudinal dans une configuration assemblée.
